# EUROPEAN PATENT SPECIFICATION

(11) **EP 4 322 348 B1**
(45) Date of publication and mention of the grant of the patent: **04.02.2026**
(21) Application number: 23219345.8
(22) Date of filing: 19.05.2022
(51) Int. Cl.: E02D 27/44, E02D 27/50, B60L 1/00, B60L 53/31, H02G 3/04

(54) **ANCHORING ELEMENT FOR CHARGING STATION FOUNDATION AND METHOD OF INSTALLING A CHARGING STATION**
VERANKERUNGSELEMENT FÜR LADESTATIONSFUNDAMENT UND VERFAHREN ZUR INSTALLATION EINER LADESTATION
ÉLÉMENT D'ANCRAGE POUR FONDATION DE STATION DE CHARGE ET PROCÉDÉ D'INSTALLATION D'UNE STATION DE CHARGE

(30) Priority: 21.05.2021 SE 2150649
(43) Date of publication of application: 14.02.2024
(62) Divisional of application: 22729682.9
(73) Proprietor: Unimi Holding AB, 187 73 Täby (SE)
(72) Inventor: Svensson, Stefan, 355 73 Gemla (SE); Hökfelt, Mathias, 187 73 Täby (SE)
(74) Representative: Ström & Gulliksson AB

(56) References cited:
- EP-A2- 2 668 063
- EP-B1- 2 668 063
- KR-B1- 101 737 819

## Description

### TECHNICAL FIELD

The present invention generally pertains to infrastructure for fully electric vehicles or plug-in hybrid vehicles, and more specifically to devices for anchoring a charging station to ground.

### BACKGROUND

Vehicles provided with electric motors and batteries for powering said electric motors are increasingly popular. One reason is the ability to drive the vehicles without using combustion engines, thereby avoiding consumption of fossil fuels and emission of combustion gases.

Modern battery technology makes it possible to store enough energy on board a vehicle to drive it using only battery power. However, battery capacity is limited and cost is high and therefore infrastructure for charging the batteries should be readily available such that the vehicle can be charged at the convenience of the driver, for example outside a shopping mall, at a public car park or at work.

To efficiently provide a charging infrastructure, the design of devices used to anchor charging stations to ground may be optimised.

EP 2 668 063 A2 discloses a foundation system for charging poles. A device for mounting of a charging pole has a foundation member configured to be installed below ground level, and anchoring means by which the charging pole is mountable to the foundation member. The anchoring means has a detachable adapter element configured to fit a charging pole to the foundation member.

KR 101 737 819 B1 discloses a multi-functional base for an electric vehicle charger and a construction method thereof. The multi-functional base foundation includes: a charger; a perforated board on which a plurality of perforated holes are formed; an upper panel; a control box; a multiple radial electrolyte ground rod with a buried structure; and a general ground which is constructed with the multiple radial electrolyte ground rod. The construction method includes: a multi-functional base foundation digging process; a base drilling process for burying a ground; a multi-functional base burying process; a flat iron assembly process for correction; a PVC jig cover combining process; a concrete and ground reduction material filling process; a PVC jig cover fastening process; and a charger and canopy installation process.

### SUMMARY

An object of the present invention is to provide for anchoring of a charging station to ground in a flexible manner as regards what type of station that may be mounted, at what time the station is mounted and how the station is oriented.

According to a first aspect of the present disclosure, an anchoring element for a charging station foundation is provided. The charging station foundation is configured to receive a charging station that is adapted to electrically charge a vehicle, such as a fully electric vehicle or a hybrid vehicle. The anchoring element comprises at least 50 weight percent plastic material and is adapted to receive first threaded fasteners by means of which the anchoring element may be attached to a foundation member of the charging station foundation and second threaded fasteners by means of which the charging station may be attached to the anchoring element.

The anchoring element may serve the dual purposes of covering the foundation member and also mounting the charging station to the foundation member. Since the charging station is attached to the anchoring element by means of threaded fasteners, the anchoring element allows charging stations of different types to be mounted. The charging station may also be oriented in any direction. The threaded fasteners may extend through a mounting interface of the charging station and into the anchoring element at positions that correspond to the mounting interface of the charging station. Such a mounting interface may be formed by through-holes in a base of the charging station. Thus, the anchoring element provides flexibility as regards what type of station that is mounted and how the station is oriented.

The anchoring element is typically attached to the foundation member at the time of installation of the foundation member. The charging station may be mounted to the anchoring element at the same time, or at a later time. Thus, the anchoring element provides flexibility as regards at what time the station is mounted. The anchoring element may be dimensioned to cover the foundation member, or at least a vertically oriented opening of the foundation member. The foundation member is typically a hollow structure configured not only to rigidly support the charging station, but also to lead power cables to the charging station. The anchoring element may be of sufficient strength to withstand the load of vehicles, such as passenger cars, passing over the anchoring element.

The anchoring element thus combines the functions of a foundation member cover (or lid) and an adapter element for mounting a charging station to a foundation member.

The anchoring element may be dimensioned to cover an area that extends beyond the foundation member. Thereby, a charging station having a mounting interface that is larger than the foundation member may be secured to the foundation member via the anchoring element.

An anchoring element comprising at least 50 weight percent plastic material may be light-weight, as compared for example to anchoring elements consisting of concrete or metal, and may involve less CO₂ emissions during manufacture and transport. A light-weight anchoring element is easy to handle, transport and install. Typically, the anchoring element comprises at least 90 weight percent plastic material. The anchoring element may be made of 100 percent plastic material, which may be beneficial in manufacturing and recycling.

If the areas of the anchoring element that are adapted to receive the first and second threaded fasteners are made of plastic material, the threaded fasteners may easily be drawn through the anchoring element. Plastic material may allow the heads of the fasteners (e.g. screw heads) to be countersunk into the anchoring element. In addition, the threaded fasteners may be attached to the anchoring element at any position of the anchoring element that is made from plastic material. For example, the first and second threaded fasteners may be self-tapping screws.

The anchoring element may essentially have the shape of three concentric, stacked plate-shaped portions. A first plate-shaped portion may act as a cover portion, a second plate-shaped portion may act as a load-bearing portion and a third plate-shaped portion may act as a support portion. The thickness of the load-bearing portion may be approximately 25 to 50 millimeters. The load-bearing portion may extend over the vertically oriented opening of the hollow foundation member and rest on a rigid foundation recess of the foundation member. The load-bearing portion may be solid.

An anchoring element of a shape that comprises three such portions may be especially suitable to be formed of plastic material and provide sufficient strength to function as a foundation member cover and for supporting a charging station.

Should e.g. vehicle bump against the charging station with sufficient force to break the anchoring of the charging station, typically only the relatively low-cost anchoring element will need to be replaced.

The anchoring element may comprise a cable opening for the power cables. The anchoring element may comprise a cable opening indicator that indicates a portion of the anchoring element that may be removed to create the cable opening. Such an indicator may facilitate installation. The cable opening indicator may be a visible marking formed by a sticker, a colour marking or an elevation or depression on the anchoring element. The visible marking may be purely visual, i.e. not perceptible by touch. Upon installation of the charging station, the cable opening may be formed by cutting along the cable opening indicator using for example a jigsaw or a hole saw.

The cable opening indicator may comprise a notch in the upper surface of the anchoring element, such a notch may guide the cutting tool.

The anchoring element may be adapted to receive the first and second fasteners by the provision of indicators that indicate suitable positions for the fasteners.

The indicators may be purely visual, comprise recesses or comprise through-holes. Recesses and through-holes may guide the fasteners, and may facilitate countersinking fastener heads.

The anchoring element may be adapted to receive the first threaded fasteners by the provision of foundation indicators that indicate positions for the first threaded fasteners. The foundation indicators may be positioned such that the first threaded fasteners are led to appropriate positions on the foundation member. Such appropriate positions may be adapted to receive the first threaded fasteners. For example, if the first threaded fasteners are screws, the foundation indicators may guide the screws to positions of the foundation member that are adapted to securely receive the screws. Such positions may include the rim of the foundation member.

The foundation indicators may be visible markings formed by a sticker, colour markings or elevations/depressions on the anchoring element. The visible marking may be purely visual, i.e. not perceptible by touch. The foundation indicators may comprise recesses that guide the first threaded fasteners. Such recesses may facilitate installation should the first threaded fasteners be self-tapping screws.

The foundation indicators may comprise recesses or may comprise preformed through-holes for the first threaded fasteners.

The anchoring element may be adapted to receive the second threaded fasteners by the provision of station indicators that indicate positions for the second threaded fasteners. The station indicators may be visible markings formed by a sticker, colour markings or elevations/depressions on the anchoring element. The visible marking may be purely visual, i.e. not perceptible by touch. The station indicators may be positioned such that the second threaded fasteners are led to appropriate positions on the anchoring element. Such appropriate positions may be adapted to receive the second threaded fasteners.

The station indicators may comprise recesses for guiding the second threaded fasteners. Such recesses may facilitate installation should the second threaded fasteners be self-tapping screws.

The station indicators may be arranged in a pattern that indicates alternative positions for second threaded fasteners such that charging stations of various types may be attached to the foundation member. For example, a first pattern may comprise four recesses or visible markings that form a square that is 160 x 160 millimeter in size. A second pattern may be a rectangle that is 320 x 120 millimeter in size. Thereby, the anchoring element is adapted for easy attachment of 160 x 160 millimeters and 320 x 120 millimeters charging station mounting interfaces.

The area of the anchoring element that is adapted to receive the second threaded fasteners may have a thickness of at least 30 millimeters, such as 40 millimeters. In addition, the area may be more dense than other parts of the anchoring element or comprise strengthening ribs such that the second threaded fasteners may be securely received. Such area may be positioned below each station indicator.

The anchoring element may be plate-shaped. The anchoring element may be polygonal or circular. The anchoring element may be plate-shaped and the foundation indicators may be arranged around the periphery of the anchoring element. In this way, the foundation indicators may guide the first threaded fasteners through the anchoring element and into the rim of the foundation member. The station indicators may be arranged in a pattern that covers essentially the entire surface of the anchoring element surface that faces the charging station. The area defined by the cable opening indicator may be free from foundation indicators and station indicators as the area defined by the cable opening indicator is typically to be removed and not to receive any threaded fastener.

The plastic material that forms at least 50 weight percent of the anchoring element may comprise polypropylene (PP). In addition, the plastic material may comprise rubber. The rubber may be a blend of polypropylene and ethylene propylene diene terpolymer (PP-EPDM). Such plastic material, in particular a mixture of PP and PP-EPDM, has advantageous mechanical features over a broad temperature range, e.g. is not brittle, is resistant to ageing, ultraviolet light, chemicals and dog urine. The plastic material may be recycled plastic material.

The foundation member may comprise at least 50 weight percent plastic material. The plastic material that forms at least 50 weight percent of the foundation member may comprise polypropylene (PP). In addition, the plastic material may comprise rubber. The rubber may be a blend of polypropylene and ethylene propylene diene terpolymer (PP-EPDM). The plastic material may be recycled plastic material. Typically, the foundation member comprises at least 90 weight percent plastic material. The foundation member may be made of 100 percent plastic material.

Both the anchoring element and the foundation member may comprise at least 50 weight percent plastic material, at least 90 weight percent plastic material or 100 percent plastic material. At least the areas of the anchoring element and the foundation member through which threaded fasteners are to be arranged may be made of plastic material.

According to a second aspect of the present disclosure, and anchoring element arrangement is provided. Such an arrangement may comprise the above-described anchoring element and the first and second threaded fasteners. The second threaded fasteners may be screws, such as self-tapping screws. The first threaded fasteners may be screws, such as self-tapping screws.

According to a third aspect of the present disclosure, a charging station foundation is provided. The charging station foundation is configured to receive a charging station that is adapted to electrically charge a vehicle. The charging station foundation comprises a foundation member configured to be installed below ground level and the above-described anchoring element or anchoring element arrangement.

According to a fourth aspect of the present disclosure, a method of installing a charging station foundation is provided. The method comprises installing a foundation member below ground level, positioning an anchoring element of the type described above on the foundation member, and attaching the anchoring element to the foundation member by means of first threaded fasteners.

According to a fifth aspect of the present disclosure, a method of installing a charging station on a charging station foundation is provided. The charging station foundation comprises an anchoring element of the type described above. The method comprises removing a portion of the anchoring element to form a cable opening for power cables (unless such cable opening is preformed), positioning the charging station on the anchoring element and attaching the charging station to the anchoring element by means of second threaded fasteners.

The method of the fourth aspect may be performed at a first point in time, for example when a parking space is constructed. The method of the fifth aspect may be performed in conjunction with the method of the fourth aspect, such that charging stations may be provided simultaneously with the completion of the parking space. The method of the fifth aspect may in alternative be performed at a later time than the first point in time, such as months or years after the parking space has been completed. Before charging station has been attached to the anchoring element, the latter serves as a cover that covers the foundation member.

According to a sixth aspect of the present disclosure, a use of an anchoring element comprising at least 50 weight percent plastic material for attaching a charging station to a charging station foundation member is provided. The anchoring element may comprise at least 80 weight percent or 100 percent plastic material The advantages of using such an anchoring element have been described above.

### BRIEF DESCRIPTION OF THE DRAWINGS

In the following, embodiments of the invention will be described with reference to non-limiting examples shown in the accompanying drawings, in which:
figure 1 shows a charging station foundation comprising a foundation member, a first embodiment of an anchoring element and a lower part of a charging station (in dashed lines),
figures 2 and 3 show a second embodiment of the anchoring element,
figures 4 and 5 show the second embodiment of the anchoring element resting on an upper part of the foundation member, only the upper portion of one half of the foundation member is shown,
figure 5 shows the anchoring element and the foundation member of figure 4, but in a view from above,
figure 6 shows a third embodiment of the anchoring element resting on the foundation member and also a cross-section of the anchoring element and the foundation member, and
figure 7 illustrates a method of installing a charging station foundation as well as a method of installing a charging station.

### DETAILED DESCRIPTION

Embodiments of the present disclosure will now be described more fully hereinafter. The invention may, however, be embodied in many different forms and should not be construed as limited to the embodiments set forth herein; rather, these embodiments are provided by way of example so that this disclosure will be thorough and complete, and will fully convey the scope of the invention to those persons skilled in the art.

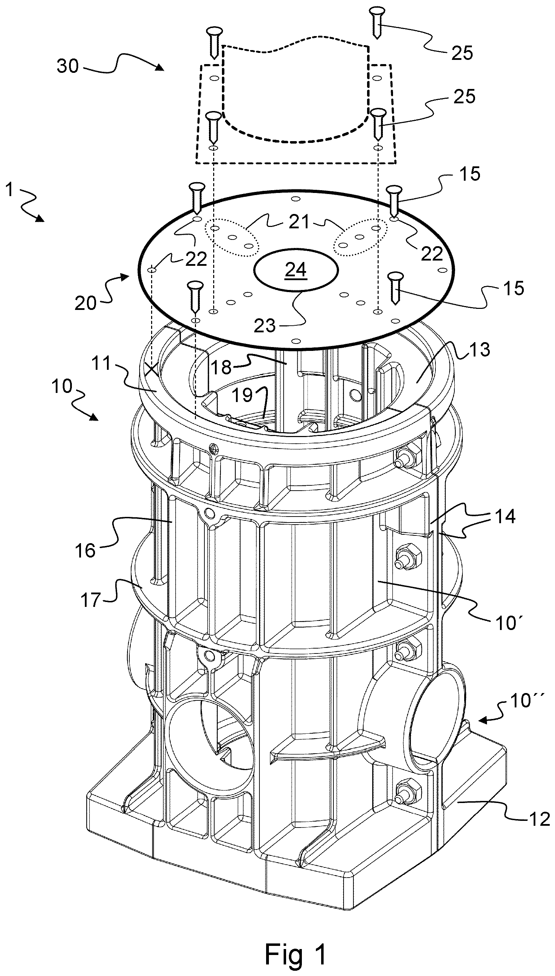

Figure 1 is an exploded view of a foundation member 10, an anchoring element 20 and the lower portion of a charging station 30. The anchoring element 20 is used to anchor the charging station 30 to the foundation member 10. Thus, the charging station 30 is attached to the foundation member 10 via the anchoring element 20. The foundation member 10 is adapted to the installed below ground level.

Also illustrated in figure 1 are threaded fasteners 15, 25 used to attach the anchoring element 20 to the foundation member 10 and to attach the charging station 30 to the anchoring element 20. Thus, the anchoring element 20 attaches the charging station 30 to the foundation member 10 by means of the threaded fasteners 15, 25. First threaded fasteners 15 attach the anchoring element 20 to the foundation member 10 and second threaded fasteners 25 attach the charging station 30 to the anchoring element 20. As will be described, the anchoring element 20 is adapted to receive the threaded fasteners 15, 25.

As is described below, the foundation member 10 is adapted to lead power cables (not shown) to the charging station 30. The power cables pass through the foundation member 10 and exit at an upper opening of the foundation member. The anchoring element may cover the upper opening of the foundation member, and may comprise a cable opening 24 such that the power cables may pass through the anchoring element 20. The cable opening 24 may be preformed or may be formed by removing a portion of the anchoring element 20 to create the cable opening 24. In order to facilitate this operation, the anchoring element may be furnished with a cable opening indicator 23, as is illustrated in figure 1.

In figure 1, that discloses a first embodiment of the anchoring element 20, the cable opening indicator 23 is provided centrally on the anchoring element 20. Typically, the charging station 30 will be located centrally on the anchoring element 20 (as is illustrated in figure 1) and the charging station will be adapted to receive the power cables in a central longitudinal cable passage within the charging station 30. In figure 1, the charging station 30 is illustrated as having a square mounting plate that supports a circular cylindrical post. The main part of the charging station 30, which typically comprises a user interface and a charging cable or charging cable socket, is not illustrated in figure 1. An upper part of the cylindrical post may either form the main part of the charging station, or support the main part of the charging station.

To facilitate the attachment of the anchoring element 20 to the foundation member 10, the anchoring element 20 may comprise foundation indicators 22. The foundation indicators 22 are provided to indicate suitable positions for the first threaded fasteners 15. First threaded fasteners 15 pass through at least some foundation indicators 22, through the anchoring element 20 and penetrate into the foundation member 10. In the embodiment of figure 1, there are eight foundation indicators 22 that are evenly distributed around the outer edge of the foundation member 10. First threaded fasteners 15 are illustrated just above four of the six foundation indicators.

As is shown, the foundation indicators 22 may be positioned such that the first threaded fasteners 15 are directed to appropriate positions on the foundation member 10. In this way, the first threaded fasteners 15 may be securely attached to the foundation member 10. For example, as is illustrated by a cross to the left in figure 1, the first threaded fasteners 15 may be directed to a solid upper edge 11 of the foundation member 10. Thus, the arrangement, or pattern, of the foundation indicators 22 may be adapted to suit the foundation member 10.

To facilitate the attachment of the charging station 30 to the anchoring element 20, the anchoring element may comprise station indicators 21. The station indicators 21 are provided to indicate suitable positions for the second threaded fasteners 25. The second threaded fasteners 25 pass through the charging station 30, at least some station indicators 21 and penetrate into the anchoring element 20.

In the embodiment of figure 1, there are twelve station indicators 21 that are arranged in four identical groups, i.e. there are three station indicators 21 in each one of the four groups. The station indicators 21 are aligned along two perpendicular straight lines that cross in the centre of the anchoring element 20. Each group comprises a proximal station indicator (closest to the centre of the anchoring element 20), a distal station indicator and a middle station indicator. In this way, the station indicators indicate suitable positions for four second threaded fasteners 25 that may attach charging stations 30 of three differently sized square mounting interfaces. In figure 1, four second threaded fasteners 25 are illustrated just above through-holes in the base of the charging station 30. The second threaded fasteners 25 of figure 1 are aligned with the distal station indicators (see the dashed lines).

Four of the eight foundation indicators 22 of figure 1 are arranged in line with the station indicators 21. It is to be understood that the foundation indicators 22 need not be arranged in line with the station indicators 21. However, for the load bearing capability of the anchoring element 20, it is believed beneficial to arrange the foundation indicators 22 in the proximity of the station indicators 21.

In an alternative embodiment (not shown) there may be sixteen station indicators 21 arranged in four identical groups, thus facilitating the attachment of charging stations 30 of four differently sized square mounting interfaces.

In the embodiment of figure 1, the cable opening indicator 23, the foundation indicators 22 and the stations indicators 21 are provided as purely visual markings on the anchoring element 20. This may be obtained by applying an adhesive sticker or paint on the top surface of the anchoring element 20.

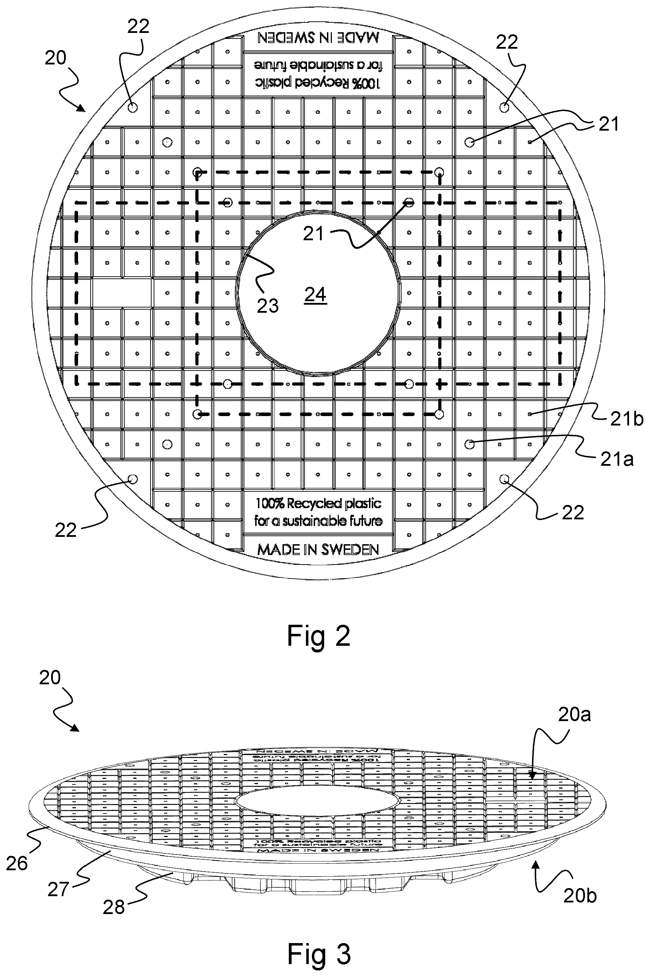

In the embodiments of the present disclosure, the anchoring element 20 is plate-shaped. Further, the anchoring element 20 is circular, as seen in a plan view from above. The anchoring element comprises a top surface 20a (see figure 3) and a bottom surface 20b.

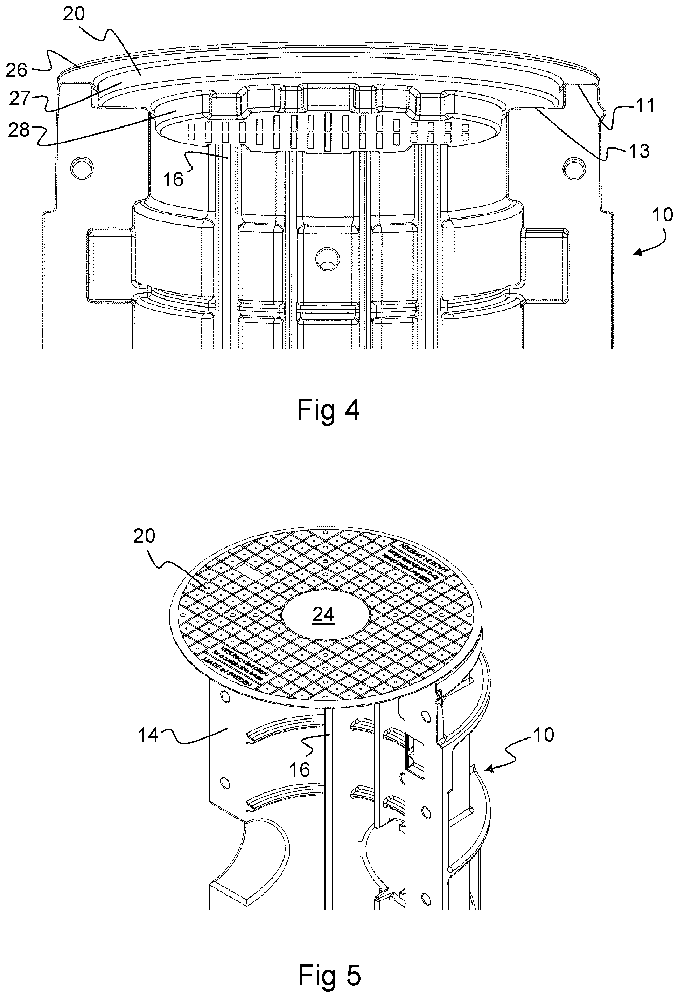

The present anchoring element 20 essentially has the shape of three concentric, stacked plates 26, 27, 28 (see figures 3 and 4) or plate-shaped portions. The anchoring element 20 may be a one-piece element manufactured e.g. by injection moulding, meaning that the three plates 26, 27, 28 are integral. When the anchoring element 20 is circular, the plates 26, 27, 28 may be referred to as discs. The first plate 26 forms a top portion of the anchoring element 20 (in the mounted condition), the second plate 27 forms a central portion and the third plate 28 forms a lower portion.

The first plate 26 may be referred to as a cover portion. The second plate 27 may be referred to as a load-bearing portion. The third plate 28 may be referred to as a support portion. Further, the anchoring element 20 and the foundation member 10 will be referred to as having circular cross-section. In other embodiments (not shown) the anchoring element 20 and the foundation member 10 may be of square or rectangular cross-sections.

The cover portion 26 may have the same outer diameter as the outer diameter of the upper edge 11 of the foundation member 10 such that the cover portion 26 entirely covers the foundation member 10. The thickness of the present cover portion 26 is much less than the thickness of the load-bearing portion 27 or the support portion 28. For example, the thickness of the cover portion 26 may be approximately 5 to 15 millimeters.

The cover portion 26 rests on the annular upper edge 11 of the foundation member 10. The edge 11 is rigidly supported by the underlying foundation member 10. In the first, second and third embodiments of the anchoring element 20, the first threaded fasteners 15 pass through the cover portion 26 of the anchoring element 20 (as is clear from in particular figure 4).

The load-bearing portion 27 of the foundation member 10 depends downwards from the cover portion 26 and rests on the annular foundation recess 13 (described below). The thickness of the load-bearing portion 27 may be approximately 25 to 50 millimeters. The load-bearing portion 27 may have the same, or somewhat smaller, outer diameter as the inner diameter of the upper edge 11 of the foundation member 10 such that the load-bearing portion 27 may be received inside the upper edge 11.

As is clear from in particular figure 4, when a charging station 30 is mounted close to the center of the anchoring element 20, the load from the charging station 30 will affect the center of the anchoring element. The load will emerge not only from the weight of the charging station 30 itself, but also from any impacts against the charging station 30.

The weight of the charging station 30 will cause shear forces and bending moments acting on the anchoring element 20. An impact against the charging station 30, for example resulting from a vehicle bumping against the charging station 30, will cause additional bending moments. The shear forces and bending moments may chiefly be absorbed by the load-bearing portion 27. The load-bearing portion 27 will transfer the loading of the charging station to the annular foundation recess 13. Clearly, some of the loading may be absorbed by the cover portion 26 and the support portion 28. However, in some embodiments the support portion 28 may be omitted.

The anchoring element 20 may be subject to substantial loads also when no charging station 30 is mounted thereon, for example should a vehicle pass over the anchoring element 20.

The support portion 28 depends downwards from the load-bearing portion 28. The thickness of the support portion 28 may be approximately 25 to 50 millimeters. The support portion 28 may have the same, or somewhat smaller, outer diameter as the inner diameter of the annular foundation recess 13 such that the support portion 28 may be received inside the annular foundation recess 13.

As has been mentioned, the support portion 28 may act to strengthen the load-bearing portion 27. In addition, the support portion 28 may receive and assist in securing the threaded fasteners 15, 25.

The cover portion 26, the load-bearing portion 27 and the support portion 28 may be solid. In the present embodiments, the support portion 28 comprises elongated voids (see figure 4) that extend into the support portion 28 from below. Such elongated voids may reduce the amount of material required for the anchoring element 20.

In an alternative embodiment (not shown), the first plate-shaped portion 26 is of a diameter, or size, that is larger than the upper edge 11 of the foundation member 10. In such a case, the first plate-shaped portion 26 covers the foundation member 10 and also an area surrounding the foundation member 10. Thereby, charging stations 30 having mounting interfaces that are larger than the upper edge 11 of the foundation member 10 may be mounted to the anchoring element. The stations indicators 21 will then typically be arranged radially outside the foundation indicators 22. In order to securely receive the second threaded fasteners 25 and securely support such a charging station 30, the thickness of the first plate-shaped portion 26 may be appropriately selected. The thickness of the first plate-shaped portion 26 may be approximately 25 to 50 millimeters. In this alternative embodiment, the third plate-shaped portion 28 may be omitted.

Turning now to figures 2 to 5, a second embodiment of the anchoring element is shown 2. While figure 1 only shows the top surface 20a, or upper side, of the anchoring element 20 of the first embodiment, figures 2 to 5 illustrate the complete anchoring element 20. I.e. also the bottom surface 20b, or underside, and the interior of the anchoring element. The anchoring element of the second embodiment differs from the anchoring element of the first embodiment only in the design of the top face.

Figure 2 shows the anchoring element 20 of the second embodiment in a plan view, i.e. from above when installed. In the second embodiment, there are four foundation indicators 22 even though another number may be chosen, such as eight as is the case in the first embodiment (figure 1).

In the second embodiment (figure 2) of the anchoring element 20, the station indicators 21 cover essentially the whole upper surface of the anchoring element 20. More precisely, the station indicators 21 cover the whole upper surface of the anchoring element 20 apart from an outer edge and the portion that may be removed to create the cable opening 24. As illustrated, the station indicators 21 may be arranged in a grid pattern. The grid may consist of columns that are separated by 20 millimeters and lines that are that are separated by 20 millimeters.

As is shown in figures 2, 3 and 5, the station in indicators 21 may be of two different kinds. In figure 2, primary station indicators are denoted 21a while secondary station indicators are denoted 21b. As is shown herein, the primary station indicators 21a may indicate positions for threaded fasteners 25 that may attach charging stations 30 having square mounting interfaces (thus the primary station indicators 21a are arranged as described above). The secondary station indicators 21b may indicate positions for threaded fasteners 25 that may attach charging stations 30 having rectangular mounting interfaces. By way of example, figure 2 illustrates in dashed lines a square charging station mounting interface of the size 160 x 160 millimeters, and a rectangular charging station mounting interface of the size 320 x 120 millimeters.

The primary station indicators 21a may be visually different from the secondary station indicators 21b. In this disclosure, the primary station indicators 21a are larger than the secondary station indicators 21b. This visual difference may facilitate the positioning of the charging station 30 on the anchoring element. A person installing a charging station 30 of square mounting interface will intuitively understand that the mounting interface is to be aligned with primary station indicators 21a. The positioning is thus quickly obtained with the charging station 30 placed centrally on the anchoring element 20. The primary station indicators 21a will also assist correct positioning of a charging station 30 of rectangular mounting interface, as it will immediately be apparent to the person performing the installation when the charging station 30 is positioned off-center.

In the embodiment of figures 2 to 5, the cable opening indicator 23, the foundation indicators 22 and the stations indicators 21a, 21b are provided as recesses made in the top surface of the anchoring element 20. In addition, grooves forming a grid separating the stations indicators 21a, 21b is are made in the top surface of the anchoring element 20. The recesses and grooves are beneficial in that the anchoring element 20 is less slippery.

The threaded fasteners 15, 25 are illustrated as being sharp-pointed in figure 1. When used together with the first, second and third embodiments of the anchoring element 20 the threaded fasteners 15, 25 are advantageously screws. A screw may be defined as a sharp-pointed externally threaded fastener. The screws 15, 25 may be secured in the foundation member 10 and in the anchoring element 20 by engaging preformed holes. Advantageously, however, the screws are self-tapping screws such that no holes are required in the foundation member 10 or in the anchoring element 20. The self-tapping screws may themselves tap holes in the foundation member 10 and in the anchoring element.

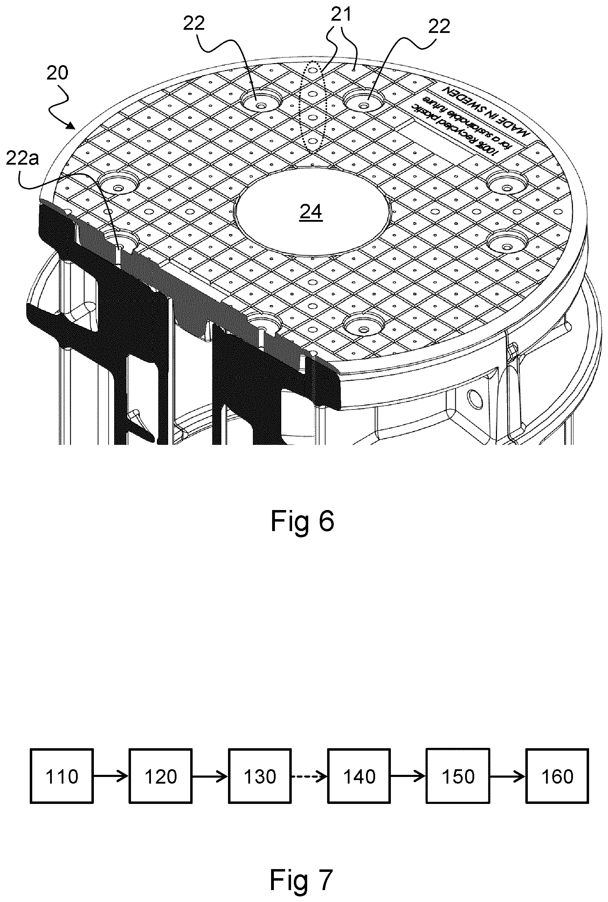

Turning now to figure 6, a third embodiment of the anchoring element 20 is shown 2. The anchoring element 20 of the third embodiment differs from the anchoring element 20 of the second embodiment only in the design of the foundation indicators 22. As can be seen, the foundation indicators 22 of figure 6 are much larger than the foundation indicators 22 of the previous embodiments. Further, the foundation indicators 22 of figure 6 comprise preformed through-holes 22a.

The foundation indicators 22 of figure 6 are adapted to receive first threaded fasteners 15 having large fastener head. For example, the fastener heads may be at least four times larger than the shaft of the fasteners. Alternatively, the foundation indicators 22 of figure 6 may receive washers that are substantially larger than the fastener head to distribute the compression force.

The through-holes 22a may receive first threaded fasteners 15 in the form of self-tapping screws whereby the self-tapping screws penetrate the surface of the foundation member 10 below the respective through-hole 22a.

The foundation member 10 that is shown in figures 1, 4, 5 and 6 will next be described. For a detailed description of such a foundation member, reference is made to the co-pending Swedish patent application number 2051070-7 and to the corresponding international patent application WO2022055413A1. The anchoring elements 20, anchoring element arrangement, charging station foundation 1, methods and use of the present disclosure do not require the specific foundation member 10 described herein. Other types of foundation members may be used. For example, the foundation member 10 need not be two-part.

The foundation member 10 may be made of plastic material. When self-tapping screws are used to attach the anchoring element 20 to the foundation member, it is beneficial if at least the areas of the foundation member 10 that receive the self-tapping screws are made of plastic material.

The foundation member 10 may be two-part. The foundation member 10 may thus comprise a first main part 10' a second main part 10" and connection means (bolts and nuts) securing the main parts 10', 10".

The foundation member 10 shown herein, when installed, has the general form of a standing cylindrical structure with a base. The height of the foundation member 10 may be approximately 1.5 times the width of the foundation member.

The cylindrical structure comprises a cylindrical wall with a plurality of external, axial strengthening ribs 16 and external, radial strengthening ribs 17. In this example, there are also internal, axial 18 strengthening ribs and internal, radial strengthening ribs 19.

The strengthening ribs 16-19 form external and internal strengthening grids on the cylindrical wall. The cylindrical wall extends from the base 12 up (as seen when installed) to the upper edge or rim 11. The rim 11 is solid and has a greater thickness than the cylindrical wall. The external, axial strengthening ribs 16 extend from the base 30 to the rim 11. The upper surface of the rim 11 forms the top edge of the foundation member 10.

The external strengthening grid 16, 17 will after installation of the foundation member 10 below ground level be filled with filling masses, such as macadam, and effectively act to hinder the foundation member 10, and thus the charging station 30, from moving in the ground.

The base 12 that has a greater radial dimension than the cylindrical structure will also act to hinder the foundation member 10 from mowing in the ground. In this embodiment, the base 12 has the form of a polygon as seen from above, more particularly a square, which improves the ability of the base 12 to hinder the charging station mounting device from rotating when installed below ground.

The peripheral top edge portion of the foundation member 10 has a circular or annular foundation recess 13 which matches and supports the load-bearing portion 27 of the anchoring element 20 The depth of the foundation recess 13 (as compared to the upper surface of the rim 11) corresponds to the thickness of the load-bearing portion 27.

The internal, axial strengthening ribs 18 preferably, as shown in this embodiment, have upper ends that lie flush with the foundation recess 13, such that the internal, axial strengthening ribs provide additional support to the anchoring element 20, more precisely to the second plate-shaped portion 27 (load-bearing portion). The external, axial strengthening ribs 16 supper the underside of the foundation recess 13 (see e.g. figures 1, 4 and 5).

The main parts 10', 10" respectively comprise a connection flange 14 with a number of axially distanced through holes by means of which the connection means, in this embodiment a bolt and nut assemblies, secure the connection flanges and thus the main parts to each other.

The first and second main part 10', 10" are in this embodiment of equal shape. They are manufactured from plastic material, more precisely recycled plastic material, preferably 100 % recycled plastic material.

The plastic material is in this embodiment a mixture of PP (polypropylene) and synthetic rubber. More precisely, the material is a mixture of PP and PP-EPDM (ethylene propylene diene terpolymer). PP-EPDM is a blend of PP and unvulcanised EPDM, also called ethylene propylene rubber.

The same plastic material may form the anchoring element 20.

The foundation member 10 comprises entry openings or holes for receiving the electric power cable and/or cable pipes have rounded edges, which reduces any wear on the cables/pipes. Also, the plastic material involves the advantage of lower wear, as compared to a concrete foundation member.

Referring to figure 7, a method of installing a charging station foundation will next be described. The method comprises installing 110 a foundation member below ground level. The foundation member 10 may be one as described above, or may be another type of foundation member.

The method further comprises positioning 120 an anchoring element 20 of the type described above on the foundation member 10. Depending on the design of the anchoring element 20 and the foundation member 10, it may be possible to select the rotational position of the anchoring element 20 with respect to the foundation member 10.

Next, the method comprises attaching 130 the anchoring element to the foundation member by means of first threaded fasteners 15. It follows that the foundation member is to be adapted to receive the threaded fasteners 15. For example, the threaded fasteners 15 may be self-tapping screws and if so, the foundation member 10 may comprise plastic material at least in the area where the self-tapping screws engage the foundation member 10. Screws that are not self-tapping may also be used, but then holes for the screws need be drilled through the foundation member 10 and into the foundation member 10.

It may be advantageous to use self-tapping screws as the anchoring element 20 may then be low cost in manufacture and the mounting thereof may be facilitated. The anchoring element 20 may be provided as a closed, liquid-tight, structure that essentially seals the foundation member 10 after being placed 120 thereon. The self-tapping screws may attach the anchoring element 20 to the foundation member 10, and not give rise to any openings that may cause water or dirt to enter the foundation member 10.

The step of attaching the first threaded fasteners 15 may involve aligning the first threaded fasteners 15 with foundation indicators 22, which have been described above. However, the first threaded fasteners 15 need not be aligned with the foundation indicators 22.

The method of installing the charging station foundation 1 is now finalised. The charging station foundation may be furnished with a charging station at the same time as the charging station foundation is installed, or at a later time. The fact that the method of installing a charging station may be performed at a later time is illustrated by the dashed arrow between steps 130 and 140 in figure 7.

Still referring to figure 7, the method of installing a charging station on a charging station foundation will next be described. The charging station foundation 1 comprises an anchoring element 20 of the type described above.

The method comprises removing 140 a portion of the anchoring element 20 to form a cable opening 24 for cables. This step may be facilitated by a cable opening indicator 23 that may be provided on the anchoring element 20. For example, the cable opening indicator 23 may be a groove that guides a cutting tool. Thus, the step of removing 140 the portion of the anchoring element 20 form the cable opening 24 may comprise aligning a cutting tool with the cable opening indicator 23.

Next, the method comprises positioning 150 the charging station 30 on the anchoring element 20. This step may involve aligning a mounting interface of the charging station 30 with the above-described station indicators 21.

Finally, the method comprises attaching 160 the charging station 30 to the anchoring element by second treaded fasteners 25, which have been described above.

The anchoring element 20 may be manufactured with the cable opening 24 preformed. In such a case the step of removing 140 a portion of the anchoring element 20 to form a cable opening 24 is omitted.

In the drawings, the anchoring element has been denoted reference numeral 20 in all three embodiments. As an alternative, the anchoring element shown in figure 1 could be denoted 20, the anchoring element shown in figures 2-5 could be denoted 20' and the anchoring element shown in figure 6 could be denoted 20". Similarly the station indicators and the foundation indicators could be denoted 21, 21', 21" and 22, 22' and 22", respectively.

Modifications and other variants of the described embodiments will come to mind to one skilled in the art having benefit of the teachings presented in the foregoing description and associated drawings. Therefore, it is to be understood that the embodiments are not limited to the specific example embodiments described in this disclosure and that modifications and other variants are intended to be included within the scope of this disclosure. For example, as has been mentioned, other types of foundation members than the one shown herein may be used. The foundation member need not have the shape of a straight cylinder (as exemplified herein) but may e.g. be frusto-conical or polygonal.

Furthermore, although specific terms may be employed herein, they are used in a generic and descriptive sense only and not for purposes of limitation. Therefore, a person skilled in the art would recognize numerous variations to the described embodiments that would still fall within the scope of the appended claims. As used herein, the terms "comprise/comprises" or "include/includes" do not exclude the presence of other elements or steps. Furthermore, although individual features may be included in different claims (or embodiments), these may possibly advantageously be combined, and the inclusion of different claims (or embodiments) does not imply that a certain combination of features is not feasible and/or advantageous. In addition, singular references do not exclude a plurality. Finally, reference numerals in the claims are provided merely as a clarifying example and should not be construed as limiting the scope of the claims in any way.

## Claims

1. An anchoring element (20) for a charging station foundation (1), the charging station foundation (1) being configured to receive a charging station (30) adapted to electrically charge a vehicle, wherein the anchoring element (20) comprises at least 50 weight percent plastic material and is adapted to receive first threaded fasteners (15) by means of which the anchoring element (20) may be attached to a foundation member (10) of the charging station foundation (1) and to receive second threaded fasteners (25) by means of which the charging station (30) may be attached to the anchoring element (20) such that the charging station (30) may be attached to the foundation member (10) via the anchoring element (20), wherein the second threaded fasteners (25) are screws.

2. The anchoring element (20) of claim 1, comprising a cable opening indicator (23) that indicates a portion of the anchoring element (20) that may be removed to create a cable opening (24) for power cables.

3. The anchoring element (20) of claim 1 or 2, wherein the anchoring element (20) comprises foundation indicators (22) that indicate positions for the first threaded fasteners (15).

4. The anchoring element (20) of claim 3, wherein the foundation indicators (22) comprise recesses for guiding the first threaded fasteners (15) or wherein the foundation indicators (22) comprise through-holes (22a) for the first threaded fasteners (15).

5. The anchoring element (20) of any preceding claim, wherein the anchoring element (20) comprises station indicators (21) that indicate positions for the second threaded fasteners (25).

6. The anchoring element (20) of claim 5, wherein the station indicators (21) comprise recesses for guiding the second threaded fasteners (25).

7. The anchoring element (20) of to claim 5 or 6, wherein the station indicators (21) are arranged in a pattern that indicate alternative positions for second threaded fasteners (25) such that charging stations (30) of various types may be attached to the foundation member (20).

8. The anchoring element (20) of any preceding claim, wherein the plastic material comprises polypropylene (PP).

9. The anchoring element (20) of claim 8, wherein the plastic material comprises rubber, wherein optionally the rubber is a blend of polypropylene and ethylene propylene diene terpolymer (PP-EPDM).

10. The anchoring element (20) of any preceding claim essentially having the shape of three stacked plate-shaped portions (26, 27, 28).

11. The anchoring element (20) of any preceding claim, comprising a load bearing portion (27) that is of a thickness of 25 to 50 millimeters.

12. The anchoring element (20) of any preceding claim, wherein the anchoring element (20) is of sufficient strength to withstand the load of a vehicle passing over the anchoring element (20).

13. The anchoring element (20) of any preceding claim, wherein the first threaded fasteners (15) are screws, i.e. sharp-pointed externally threaded fasteners.

14. The anchoring element (20) of any preceding claim, wherein the first threaded fasteners (15) and/or the second threaded fasteners (25) are self-tapping screws.

15. A charging station foundation (1) configured to receive a charging station (30), said charging station (30) being adapted to electrically charge a vehicle, wherein the charging station foundation (1) comprises
- a foundation member (10) configured to be installed below ground level, and
- an anchoring element (20) of any preceding claim.

## Patentansprüche

1. Verankerungselement (20) für einen Ladestationssockel (1), wobei der Ladestationssockel (1) konfiguriert ist, eine Ladestation (30) aufzunehmen, die ausgelegt ist, ein Fahrzeug elektrisch aufzuladen, wobei das Verankerungselement (20) mindestens 50 Gew.-% Kunststoffmaterial umfasst und ausgelegt ist, erste Gewindebefestigungselemente (15) aufzunehmen, mittels derer das Verankerungselement (20) an einem Sockelelement (10) des Ladestationssockels (1) angebracht werden kann, und zweite Gewindebefestigungselemente (25) aufzunehmen, mittels derer die Ladestation (30) am Verankerungselement (20) angebracht werden kann, derart, dass die Ladestation (30) über das Verankerungselement (20) am Sockelelement (10) angebracht werden kann, wobei die zweiten Gewindebefestigungselemente (25) Schrauben sind.

2. Verankerungselement (20) nach Anspruch 1, das einen Kabelöffnungsindikator (23) umfasst, der einen Abschnitt des Verankerungselements (20) angibt, der entfernt werden kann, um eine Kabelöffnung (24) für Stromkabel zu erzeugen.

3. Verankerungselement (20) nach Anspruch 1 oder 2, wobei das Verankerungselement (20) Sockelindikatoren (22) umfasst, die Positionen für die ersten Gewindebefestigungselemente (15) angeben.

4. Verankerungselement (20) nach Anspruch 3, wobei die Sockelindikatoren (22) Aussparungen zum Führen der ersten Gewindebefestigungselemente (15) umfassen oder wobei die Sockelindikatoren (22) Durchgangslöcher (22a) für die ersten Gewindebefestigungselemente (15) umfassen.

5. Verankerungselement (20) nach einem der vorhergehenden Ansprüche, wobei das Verankerungselement (20) Stationsindikatoren (21) umfasst, die Positionen für die zweiten Gewindebefestigungselemente (25) angeben.

6. Verankerungselement (20) nach Anspruch 5, wobei die Stationsindikatoren (21) Aussparungen zum Führen der zweiten Gewindebefestigungselemente (25) umfassen.

7. Verankerungselement (20) nach Anspruch 5 oder 6, wobei die Stationsindikatoren (21) in einem Muster angeordnet sind, derart, dass sie alternative Positionen für zweite Gewindebefestigungselemente (25) angeben, derart, dass Ladestationen (30) diverser Typen am Sockelelement (20) angebracht werden können.

8. Verankerungselement (20) nach einem der vorhergehenden Ansprüche, wobei das Kunststoffmaterial Polypropylen (PP) umfasst.

9. Verankerungselement (20) nach Anspruch 8, wobei das Kunststoffmaterial Kautschuk umfasst, wobei der Kautschuk wahlweise eine Mischung aus Polypropylen und einem Ethylen-Propylen-Dien-Terpolymer (PP-EPDM) ist.

10. Verankerungselement (20) nach einem der vorhergehenden Ansprüche, das im Wesentlichen die Form von drei gestapelten, plattenförmigen Abschnitten (26, 27, 28) aufweist.

11. Verankerungselement (20) nach einem der vorhergehenden Ansprüche, das einen Lastträgerabschnitt (27) umfasst, der eine Dicke im Bereich von 25 bis 50 Millimetern aufweist.

12. Verankerungselement (20) nach einem der vorhergehenden Ansprüche, wobei das Verankerungselement (20) eine ausreichende Festigkeit aufweist, um der Last eines Fahrzeugs, das über das Verankerungselement (20) fährt, zu widerstehen.

13. Verankerungselement (20) nach einem der vorhergehenden Ansprüche, wobei die ersten Gewindebefestigungselemente (15) Schrauben, d. h. Befestigungselemente mit scharfer Spitze und Außengewinde, sind.

14. Verankerungselement (20) nach einem der vorhergehenden Ansprüche, wobei die ersten Gewindebefestigungselemente (15) und/oder die zweiten Gewindebefestigungselemente (25) Selbstschneideschrauben sind.

15. Ladestationssockel (1), der konfiguriert ist, eine Ladestation (30) aufzunehmen, wobei die Ladestation (30) ausgelegt ist, ein Fahrzeug elektrisch aufzuladen, wobei der Ladestationssockel (1) Folgendes umfasst:
- ein Sockelelement (10), das konfiguriert ist, unterhalb einer Bodenhöhe installiert zu sein, und
- ein Verankerungselement (20) nach einem der vorhergehenden Ansprüche.

## Revendications

1. Élément d'ancrage (20) pour une fondation de borne de recharge (1), la fondation de borne de recharge (1) étant configurée pour recevoir une borne de recharge (30) adaptée à la charge électrique d'un véhicule, dans lequel l'élément d'ancrage (20) comprend au moins 50 % en poids de matériau plastique et est adapté pour recevoir de premières fixations filetées (15) au moyen desquelles l'élément d'ancrage (20) peut être fixé à un organe de fondation (10) de la fondation de borne de recharge (1) et pour recevoir de deuxièmes fixations filetées (25) au moyen desquelles la borne de recharge (30) peut être fixée à l'élément d'ancrage (20) de sorte que la borne de recharge (30) puisse être fixée à l'organe de fondation (10) via l'élément d'ancrage (20), dans lequel les deuxièmes fixations filetées (25) sont des vis.

2. Élément d'ancrage (20) selon la revendication 1, comprenant un indicateur d'ouverture de câble (23) qui indique une partie de l'élément d'ancrage (20) qui peut être retirée pour créer une ouverture de câble (24) pour des câbles d'alimentation.

3. Élément d'ancrage (20) selon la revendication 1 ou 2, dans lequel l'élément d'ancrage (20) comprend des indicateurs de fondation (22) qui indiquent des positions pour les premières fixations filetées (15).

4. Élément d'ancrage (20) selon la revendication 3, dans lequel les indicateurs de fondation (22) comprennent des évidements pour guider les premières fixations filetées (15) ou dans lequel les indicateurs de fondation (22) comprennent des trous traversants (22a) pour les premières fixations filetées (15).

5. Élément d'ancrage (20) selon l'une quelconque des revendications précédentes, dans lequel l'élément d'ancrage (20) comprend des indicateurs de borne (21) qui indiquent des positions pour les deuxièmes fixations filetées (25).

6. Élément d'ancrage (20) selon la revendication 5, dans lequel les indicateurs de borne (21) comprennent des évidements pour guider les deuxièmes fixations filetées (25).

7. Élément d'ancrage (20) selon la revendication 5 ou 6, dans lequel les indicateurs de borne (21) sont agencés selon un motif qui indique des positions alternatives pour les deuxièmes fixations filetées (25) de sorte que des bornes de recharge (30) de divers types puissent être fixées à l'organe de fondation (20).

8. Élément d'ancrage (20) selon une quelconque revendication précédente, dans lequel le matériau plastique comprend du polypropylène (PP).

9. Élément d'ancrage (20) selon la revendication 8, dans lequel le matériau plastique comprend du caoutchouc, dans lequel éventuellement le caoutchouc est un mélange de polypropylène et de terpolymère d'éthylène-propylène-diène (PP-EPDM).

10. Élément d'ancrage (20) selon une quelconque revendication précédente ayant essentiellement la forme de trois parties en forme de plaque empilées (26, 27, 28).

11. Élément d'ancrage (20) selon une quelconque revendication précédente, comprenant une partie porteuse (27) qui est d'une épaisseur de 25 à 50 millimètres.

12. Élément d'ancrage (20) selon une quelconque revendication précédente, dans lequel l'élément d'ancrage (20) présente une résistance suffisante pour résister à la charge d'un véhicule passant sur l'élément d'ancrage (20).

13. Élément d'ancrage (20) selon une quelconque revendication précédente, dans lequel les premières fixations filetées (15) sont des vis, c'est-à-dire des fixations pointues filetées vers l'extérieur.

14. Élément d'ancrage (20) selon une quelconque revendication précédente, dans lequel les premières fixations filetées (15) et/ou les deuxièmes fixations filetées (25) sont des vis autotaraudeuses.

15. Fondation de borne de recharge (1) configurée pour recevoir une borne de recharge (30), ladite borne de recharge (30) étant adaptée à la charge électrique d'un véhicule, dans laquelle la fondation de borne de recharge (1) comprend
- un organe de fondation (10) configuré pour être installé sous le niveau du sol, et
- un élément d'ancrage (20) selon une quelconque revendication précédente.
